Europäisches Patentamt

European Patent Office

Office européen des brevets

(19)

(11) **EP 1 176 846 A2**

(12) ## EUROPEAN PATENT APPLICATION

(43) Date of publication:
**30.01.2002 Bulletin 2002/05**

(51) Int Cl.[7]: **H04Q 11/00**

(21) Application number: **01306070.2**

(22) Date of filing: **13.07.2001**

(84) Designated Contracting States:
**AT BE CH CY DE DK ES FI FR GB GR IE IT LI LU
MC NL PT SE TR**
Designated Extension States:
**AL LT LV MK RO SI**

(30) Priority: **28.07.2000 GB 0018677**

(71) Applicant: **Nortel Networks Limited**
**St. Laurent, Quebec H4S 2A9 (CA)**

(72) Inventors:
• **Warbrick, Kevin**
**Bishop's Stortford, Herts CN23 1DR (GB)**
• **Roorda, Peter**
**Ottawa, Ontario K1Y 1B9 (CA)**
• **Pugh, David A**
**Shepton Mallet BA4 4AE (GB)**

(74) Representative: **Parkinson, Neil Scott**
**Nortel Networks Limited, IPS Law Group,**
**London Road**
**Harlow, Essex CM17 9NA (GB)**

(54) **Optical buffer**

(57) An optical buffer is described that comprises a photonic switch having at least a first optical input for receiving optical signals, at least a first optical output for outputting optical signals, M additional optical inputs and M additional optical outputs, where M is a positive integer; and M optical delay lines, each delay line extending between one of said additional inputs and one of said additional outputs.

A method of buffering signals in such an optical buffer is also described.

**Recirculating Integer Array Delay Line Optical Buffer**

- Minimum buffer: D, Maximum buffer $\sum_{k=1}^{M} kD$

- Effective buffer: Traffic dependent

**Figure 2**

EP 1 176 846 A2

## Description

## Field Of The Invention

The present invention relates generally to buffering of optical signals, and in particular to a method and apparatus for providing an optical buffer for the buffering of signals in an optical network.

## Background Of The Invention

Electronic buffers are widely available, and commonly used in many communications networks. Such memory devices allow the temporary storage of data. This facility may be utilised to resolve contention issues, for instance, when two different sources are simultaneously attempting to send signals through a single output. A buffer allows the temporary storage of one of these signals, so that it may be transmitted in a later time slot.

Communications networks are increasingly utilising optical transmission signals. In order to buffer such signals, it is common for the optical signals to be converted to an electronic signal, undergo electronic buffering, and then for the electronic signal to be converted back to an optical signal for further transmission. Such opto-electronic and electro-optic conversion is expensive and can act as a bottleneck in the normal high capacity, fast transmission rate of optical signals.

There exists a need for an optical buffer i.e. a buffer for optical signals that does not require the signals to be converted to an electrical or electronic format.

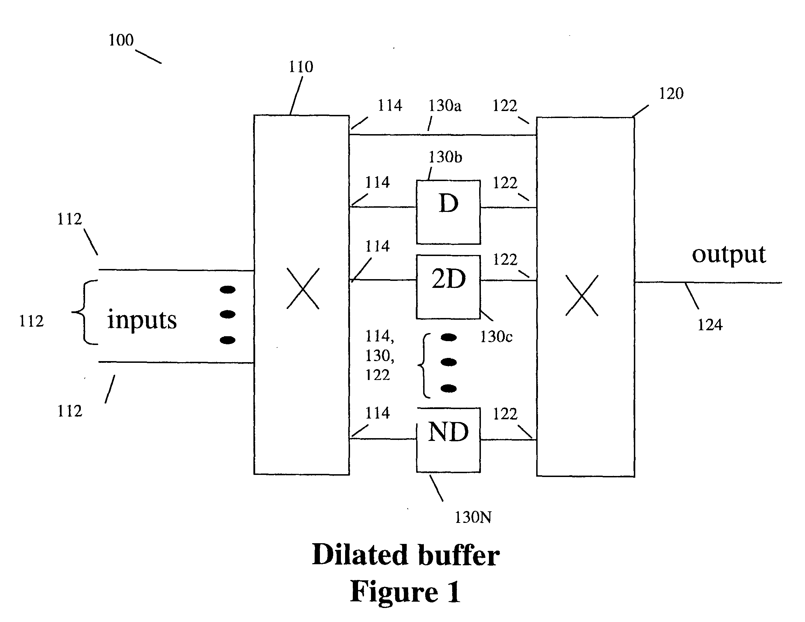

Figure 1 shows a schematic diagram of a proposed optical buffer 100. The buffer 100 comprises a first photonic switch 110, a second photonic switch 120 and a plurality of optical delay lines 130.

The first photonic switch 110 has a plurality of inputs 112 and a plurality of outputs 114, and is arranged to switch optical signals from any of the inputs 112 to any of the outputs 114. The second photonic switch 120 has a plurality of inputs 122 and a single output 124, and is arranged to switch optical signals from any one of the inputs 122 to the output 124.

Each of the outputs 114 from switch 110 is connected to a respective input 122 of switch 120 by one of the optical delay lines 130.

The buffer is arranged to resolve contention between simultaneously incoming optical packet signals on any of the inputs 112 for passing to the single output 124. Each packet is of a pre-determined set duration D.

There exist a total of (N+1) optical delay lines 130, providing an incremental integer packet delay, i.e. delay line 130a provides no delay (and acts as a straight pass through), delay line 130b provides a delay of D, delay line 130c provides a delay of 2D (twice the packet size) etc, up to delay line 130N which provides a delay of ND (N x the packet size).

In operation the various delay lines will be used as appropriate in order to ensure that two signals do not simultaneously appear at the output. For instance, if a first optical packet and a second optical packet both simultaneously are provided to the inputs 112, then the first packet could be switched via delay line 130a and the second packet via delay line 130b in order that the first and second packet will appear in series at output 124. Contention between the first and second packets, which were simultaneously received at the buffer 100, is hence resolved.

Optical packet buffers of this type of architecture are disclosed in both "Design Issues of Optical IP Routers for Internet Backbone Applications" by Franco Callegati, IEEE communications Magazine, December 1999, pages 122 to 128; and "A New Wavelength-Routed Photonic Packet Buffer Combining Parallel Delay-Lines with Delay-Line Loops" by Wen De Zhong, Tucker, R.S. Communications, APCC/OECC '99. Fourth Optoelectronics and Communications Conference , 1999, pages 405 to 408.

Such an optical buffer requires two photonic (also known as optical) switches. Photonic switches, particularly photonic switches that operate fast enough to be utilised in a buffer for an optical communications network, are relatively expensive, with the cost scaling in relation to the size (number of inputs and outputs) of the switch. Also, utilising two optical switches in a buffer requires simultaneous control of both switches. It is therefore desirable to provide an optical buffer utilising only one photonic switch.

Photonic switches are often relatively high loss devices, attenuating the optical signal as it passes through the switch. It is therefore desirable to provide an optical buffer that does not always require the signal to pass through two or more switches prior to being passed to the buffer output.

Additionally, the buffer illustrated in figure 1 can only delay a signal by the same time period as provided by the longest buffer delay line. It is desirable to provide an optical buffer that does not have such a limitation.

It is an object of the present invention to provide an optical buffer that substantially addresses one or more of the problems of the prior art.

## Statement Of The Invention

According to a first aspect, the present invention provides an optical buffer comprising a photonic switch having at least a first optical input for receiving optical signals, at least a first optical output for forwarding optical signals, M additional optical inputs and M additional optical outputs, where M is a positive integer; and M optical delay lines, each delay line extending between one of said additional inputs and one of said additional outputs.

Such an architecture allows the re-circulation of optical signals within the buffer, thus allowing the delay of a signal for a longer period than that provided by the longest buffer delay line. Further, the device can utilise only a single photonic switch, and thus uses the switch ports more efficiently and simplifies control. Additionally, as a received optical signal may be passed directly from an input to the forwarding output, the minimum number of passes through a switch within the buffer is one (compared with the two passes of the prior art).

Preferably, the optical buffer is arranged for an optical packet switching network, said network switching packets of a pre-determined size, each of said optical delay lines being arranged to provide a delay to an optical signal of substantially an integral multiple of said packet size.

Preferably, each delay line is arranged to provide a different delay, the lengths of the delay provided by the different delay lines forming the respective terms of an arithmetic progression.

Alternatively, the lengths of the delay provided by the different delay lines may form the respective terms of a geometric series.

Instead of each delay line having a different delay, each delay line may be arranged to provide substantially the same delay.

As the switch may have a pre-determined switching speed, each delay line may be additionally arranged to provide a guard band delay sufficient to take into account said switching speed.

Preferably, the buffer is arranged to receive packets which will be temporally aligned to within a pre-determined tolerance, with each delay line being additionally arranged to provide a guard band delay sufficient to take into account said pre-determined tolerance.

The optical buffer may further comprise optical packet synchronising means arranged to align packets received on different inputs that temporally overlap, said alignment being to within the above-mentioned pre-determined temporal accuracy.

The optical buffer may also further comprise control means arranged to route the received optical signals through the optical buffer according to a pre-determined control method.

Preferably, the optical buffer further comprises optical amplification means arranged to amplify optical signals, for decreasing the affects of attenuation of an optical signal as it passes through the buffer. The amplification could be provided directly by the switch (e.g. a suitable semi-conductor switch can be arranged to provide such amplification), or by one or more optical amplifiers connected to the delay lines, inputs or outputs.

According to a further aspect, the present invention provides a telecommunications system comprising at least one optical transmitter, at least one optical receiver, an optical transmission medium extending between said transmitter and said receiver, and an optical buffer comprising a photonic switch having at least

a first optical input for receiving optical signals, at least a first optical output for outputting optical signals, M additional optical inputs and M additional optical outputs, where M is a positive integer; and M optical delay lines, each delay line extending between one of said additional inputs and one of said additional outputs.

According to another aspect, the present invention provides a method for buffering an optical signal in an optical buffer comprising a photonic switch having at least a first and a second optical input for receiving optical signals, a first optical output for outputting optical signals, M additional optical inputs and M additional optical outputs, where M is a positive integer; and M optical delay lines, each delay line extending between one of said additional inputs and one of said additional outputs, the method comprising: receiving at said first and second inputs two optical signals that temporally overlap, and are for the same output; assigning a priority flag to each signal; forwarding the signal in the buffer with the highest priority;

placing the next highest priority signal in the shortest available delay line; repeating the above step until all packets have been placed in a delay line; and sequentially increasing the priority flag of each packet as it passes through a delay line so as to ensure that the most delayed pockets have the highest priority.

Such a method has been shown to be extremely robust, and ensures that packets order is presented at the buffer output i.e. later packets cannot exit the buffer through an output before earlier packets.

Preferably, if the number of packets requiring buffering is such as to exceed the number of available delay lines, any such excess packets are dropped, ideally at an input to the buffer. This aspect ensures efficient buffer use.

According to another aspect, the present invention provides a method of buffering an optical signal utilising a photonic switch having at least three inputs and two outputs, and having at least one of said inputs connected to a respective output by an optical delay line, the method comprising the steps of receiving an optical signal on an input; switching the signal to an output connected to a delay line; transmitting the signal along the delay line; and switching the signal from an input connected to a delay line to an output not connected to a delay line.

Preferably, at least one of said outputs is substantially a beam stop, the method comprising the step of switching said signal to the beam stop output for dropping the signal. Such a beam stop can be provided at an output to the switch. Alternatively, the switch could include the beam stop means internally

The method may further comprise the step of transmitting the signal along the delay line at least a second time.

The switch may have at least having at least four inputs and three outputs, and at least two of said inputs each connected to a respective output by an optical delay line, with the method further comprising the steps of switching the signal to a second output connected to a delay line; and transmitting the signal along the delay line.

According to a further aspect, the present invention provides a computer programme arranged to perform the control of any of the methods described above.

The computer programme may be stored on a machine readable medium.

## Brief Description Of The Drawings

In order that a greater understanding of the invention can be obtained, embodiments of the invention will now be described with reference of the accompanying drawings, by way of example only and without intending to be limiting, in which:

Figure 1 shows an optical buffer (PRIOR ART);

Figure 2 shows an optical buffer according to a preferred embodiment of the present invention;

Figure 3 shows a method of operation of the optical buffer shown in Figure 2 according to a preferred embodiment of the present invention;

Figure 4 shows the packet loss ratio (PLR) at a 70% traffic loading for the optical buffer shown in figure 2, based on the number of integer incremental delay lines provided, and the number of times that the optical packet would pass through a switch;

Figure 5 shows an optical buffer according to an alternative embodiment of the present invention; and

Figure 6 shows an alternative architecture for providing four output ports to a system, by utilising four of the buffers shown in Figure 2.

## Detailed Description Of Preferred Embodiments

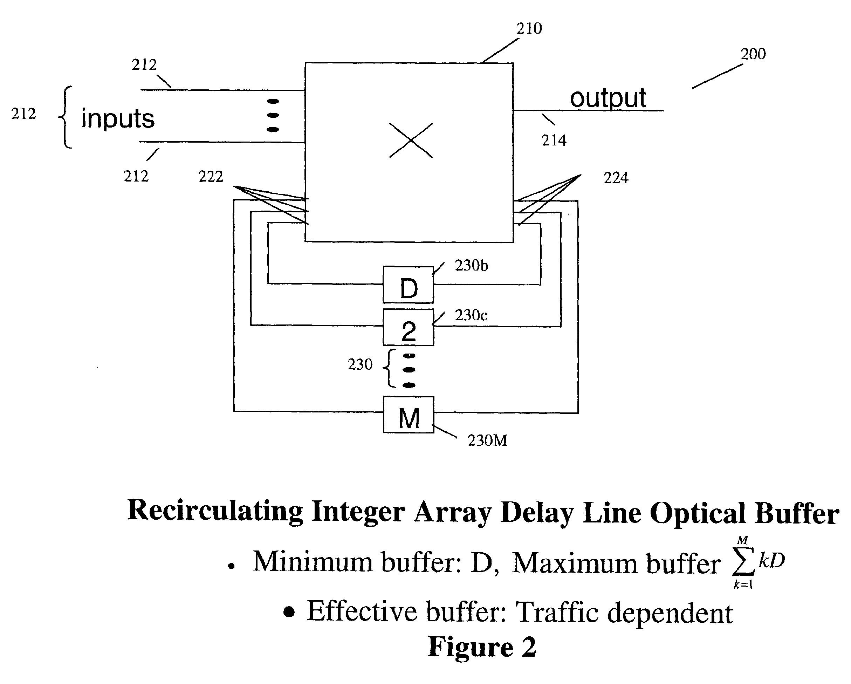

Figure 2 shows an optical buffer 200 comprising a photonic switch 210, having a number of inputs 212, 222 and a number of outputs 214, 224. The switch is arranged to switch optical signals from any of the inputs to any of the outputs.

Optical inputs 212 and the output 214 are arranged for connection to an optical packet network, for the respective receiving and transmitting of optical packet signals.

Each output 224 is connected to a respective input 222 via an optical delay line 230. There are a total of M delay lines (where M is an integer). The optical network is arranged to transmit packets of a fixed length of duration D. The optical delay lines are thus arranged to provide a delay that is substantially an integral multiple of D, with each delay line further providing an additional "guardband" delay to allow for the limited switching speed of the switch, and also for variations in the different packet arrival times at the inputs 212 within a given time slot.

In this particular embodiment, each optical delay line provides a delay substantially equal to the terms of an arithmetic progression, of difference D. Thus the first delay line 230b provides a delay of substantially D, the second delay line 230c provides a delay of substantially 2 D etc, up to the M $^{th}$ delay line 230M, which will provide a delay of substantially MD. It will be appreciated that such a buffer may be utilised to act as a pass through device ie with one of the inputs 212 connected directly to the output 214. The minimum buffering that may be provided by the buffer 200 would be equal to that of the length of the shortest optical delay line 230b i.e. the minimum buffer would be approximately D. This would require a packet to make two traversals of the switch.

Assuming that each packet may only be transmitted along an optical delay line once then the maximum buffer depth would be approximately

$$\sum_{k=1}^{M} kD$$

, and would result in a packet making a total of M+1 traversals of the switch, prior to leaving the buffer via output 214.

Obviously, in operation, the effective depth of the buffer and the packet path through the buffer will depend upon the distribution of the traffic.

In the simplest case, the optical delay line 230 may simply be an appropriate length of optical fibre. Equally, it will be appreciated other means of optical delay could be utilised to achieve the same delaying effect. For instance, appropriate types of Bragg diffraction grating could be utilised to provide the desired optical delays, and hence could act as optical delay lines.

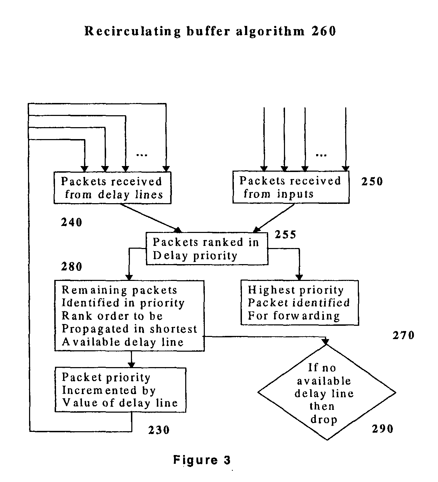

Figure 3 shows the operation of the buffer 200 according to a preferred embodiment of the present invention. Initially, packets are received from inputs 250 and from delay lines 240, such packets being of substantially a fixed length D and having a distribution of arrival times. The distribution of arrival times will give a small variation of packet arrival time within any given time slot.

For each time slot, the packet priorities are ranked 255, with the highest priority packets being identified for forwarding 270 i.e. sent to the buffer output 214. Various priority flags may be implemented. In the simplest instance, however, all incoming packets received at the buffer are assumed to have the same priority. Each packet as it enters the buffer 250 is thus assigned a priority flag which starts at an arbitarty value (e.g.one or zero), and is incremented (or decremented) each time the packet is delayed by a duration D in an optical delay line 230. For instance, a packet passing along line 230c would have the priority flag changed so as to indicate that is has been delayed twice as long as a packet passing along 230b. The priority flag thus acts as a delay counter.

In each time slot, packets are sorted at the buffer input by delay counter. If the delay counter has exceeded a pre-determined threshold (e.g. M, the number of optical delay lines) then the packet may be dropped 290. That is, the packet will not be passed to the output 214 for further transmission, or to any of the outputs 224 for further re-circulation. This may be achieved by, for instance, passing the signal to a beam stop.

The packet just beneath this threshold, with the highest priority as indicated by the delay counter, will then be forwarded 270 to the output 214 for onward transmission. If two or more packets are provided for direction to the same output 214, which have the same delay priority then the packets consistently originating from the longest (or the shortest) delay line may be forwarded 270. The remaining packets are then sent to the buffer 280. The buffer is then filled iteratively from the shortest available delay line, with the highest available priority packet going to the shortest delay line, and with only one packet being passed to one delay line. Each delay line acts to delay the packet passed to the delay line by an integer multiple of packet length. As the packet is transmitted along the delay line, the delay/priority counter is incremented by the same amount. If no optical delay lines are available then the packet is again dropped 290.

Such a method of routing packets through the buffer 200 has been proven to be extremely robust, and does not result in packets being re-ordered. Packets may be dropped either due to delay line exhaustion (i. e. no available optical delay lines as each delay line has already been assigned a packet), or the packet having exceeded a re-circulation limit. This re-circulation limit (as may be indicated by assigning a maximum value of the switch pass counter) is limited by both the accumulated optical degradation (decreasing signal to noise ratio) of the packet as it passes through the buffer and by the packet exceeding the maximum delay allowed on any one packet (ie the packet is deemed too be to old, and therefore useless).

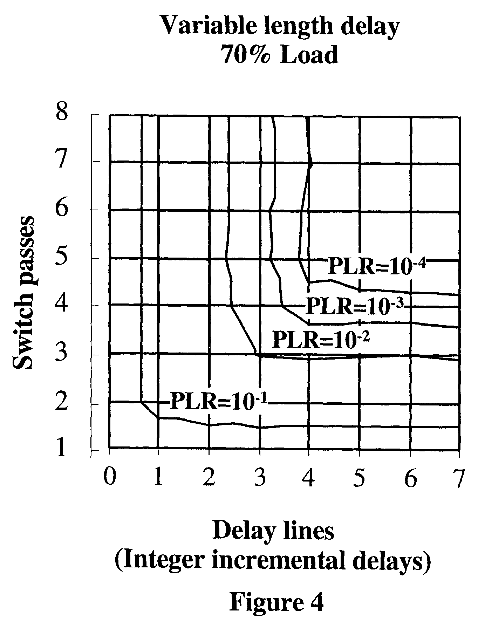

The relative affects of these two loss mechanisms were simulated, utilising a model assuming a Poisson distribution of inter-arrival times and a 70% loading of the optical buffer. The results of the simulations for the embodiment of the invention shown in figure 2, is illustrated in figure 4. The graph shows the packet loss ratio (PLR ;i.e. $10^{-1}$ indicates that one packet in ten is lost; $10^{-2}$ that one packet in a hundred is lost etc.) as a function of the number of delay lines and the number of passes that a packet takes through the switch. It can be seen that within the integer granularity of the variables a simple trend emerges, i.e. that the buffer of the present invention operated most efficiently when the number of incremental integer delay lines equals the number of allowed circulation's through the fabric, i.e. p-1 where p is the number of switch traversals.

This result is in line with expectations, from the behaviour of delay line buffers with multiple fixed delays. The use of integer incremental delay lines is shown to have good loss performance for very modest (four) delay line ports and a traffic loading of 70%. As can be seen, to minimise the packet loss ratio, it is desirable that the number of allowed re-circulation's through the buffer should be equal to the number of delay lines used in the buffer.

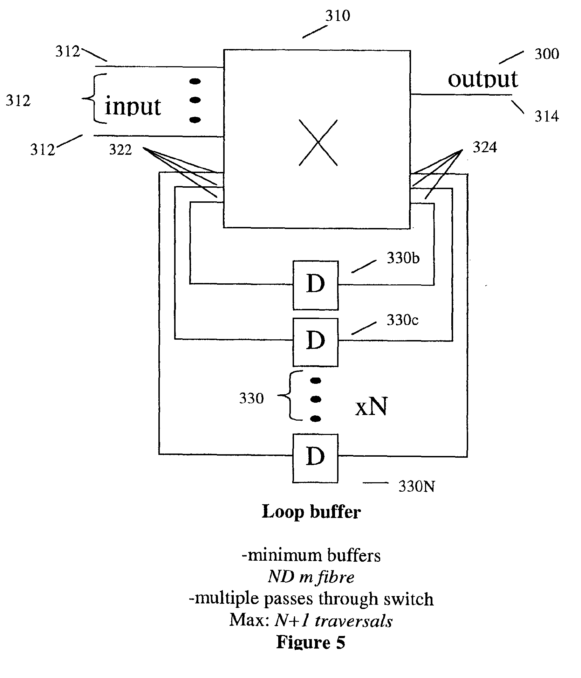

Whilst the preferred embodiment has been described as having optical delay lines that provide a set of delays corresponding approximately to the terms of an arithmetic progression of integer increment, it will be appreciated that equally other sets of delay terms could be utilised e.g. the delays could form the terms of a geometric progression. Figure 5 shows an alternative embodiment of the present invention in which each of the N optical delay lines provide a delay of similar duration. The delay is substantially equal to the duration of a packet length, with additional guard band delays being provided as appropriate. Otherwise, the embodiment is similar in structure to that shown in figure 2.

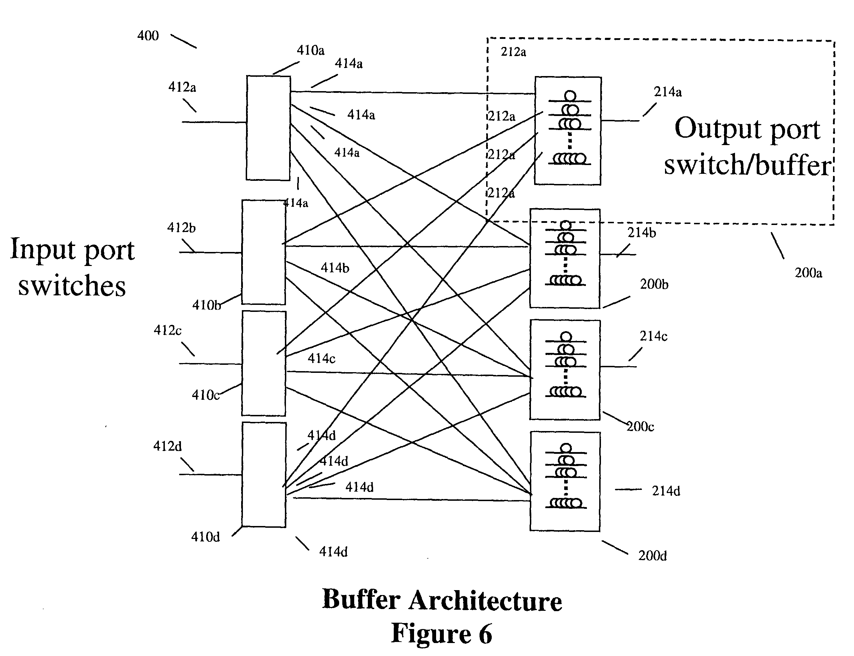

Equally, while both the embodiments have been shown as providing a single output (214, 314) for transmission of optical signals from the buffer, it will be appreciated that the design of the present invention may be used to provide a number of outputs. For instance, figure 6 shows a buffer architecture having four inputs (412a, 412b,412c,412d) and four outputs (214a, 214b, 214c,214d).

Such a buffer architecture consists of a bufferless input stage comprising photonic switches, each switch 410 having a respective input 412 for receiving an optical signal from the network. Each switch 410 has a number of outputs 414, the number of outputs 414 corresponding to the number of buffer architecture outputs 214, i.e. destination outputs to which signals received on inputs 412 will be passed. Each respective output 214 has a buffer stage 200, as per the embodiment shown in figure 2. Each buffer stage 200 has a number of inputs 212 corresponding to the total number of input ports 412. Each output from each of the separate input port switches 410 is connected to a different output port switch/buffer 200 as shown in figure 6. Thus it will be appreciated that the re-circulating integer array delay line buffer may be used in a number of configurations to provide resolution of packet contention, depending upon the number of output ports available.

Whilst the present invention can be provided with more than one buffer output 214 utilising the architecture shown in Figure 6, equally the present invention includes a buffer utilising a single photonic switch and having two or more buffer outputs. For instance, this could take the general form of the embodiment shown in Figure 2, but with simply one or more further buffer outputs 214 from the photonic switch 210.

On the other hand, a buffer could be realised simply by having a single buffer input 212 and a single buffer output 214, and otherwise be similar to the embodiment shown in Figure 2. Rather than being utilised to resolve contention between two approximately simultaneous input signals, the buffer can instead simply act as a variable length delay for delaying any signal as it passes through the buffer. Such a system could also be utilised to re-order signals as they pass through the buffer, by varying the individual delays for each respective signal by varying the passage of the signals through the delay line loops. Such a re-ordering could be based upon the incoming packets having either pre-assign priority flags indicative of the relative importance of the data being transmitted via each packet, or alternatively information in the packet header defining the relative position of the packet in a series of packets.

Whilst the preferred embodiments have been described as being utilised to buffer optical signals having a predetermined packet size D, it will be appreciated that the buffers could be utilised to buffer incoming signals of varying size/duration. Preferably, such signals would have a maximum length, with this length corresponding to the minimum delay provided by any delay line loop (e.g. D).

For the purpose of this specification, the terms "optical" and "light" should be understood as pertaining not only to the visible part of the electro magnetic spectrum, but also to the infra-red and ultra-violet parts that bound the visible part.

Any range or device given herein maybe extended or altered without losing the effect sort, as will be apparent to a skilled person from an understanding of the teaching herein.

**Claims**

1. An optical buffer comprising a photonic switch having at least

   a first optical input for receiving optical signals, at least a first optical output for outputting optical signals, M additional optical inputs and M additional optical outputs, where M is a positive integer; and

   M optical delay lines, each delay line extending between one of said additional inputs and one of said additional outputs.

2. An optical buffer as claimed in claim 1, said optical buffer being arranged for an optical packet switching network, said network switching packets of a pre-determined size,

   wherein each of said optical delay lines is arranged to provide a delay to an optical signal of substantially an integral multiple of said packet size.

3. An optical buffer as claimed in claim 1 or claim 2, wherein each delay line is arranged to provide substantially the same delay.

4. An optical buffer as claimed in claim 1 or claim 2, wherein each delay line in arranged to provide a different delay, the lengths of the delay provided by the different delay lines forming substantially the respective terms of an arithmetic progression.

5. An optical buffer as claimed in claim 4, wherein the delays form substantially a set of integer incremental delays.

6. An optical buffer as claimed in claim 1 or claim 2, wherein each delay line in arranged to provide a different delay, the lengths of the delay provided by the different delay lines forming substantially the respective terms of a geometric series.

7. An optical buffer as claimed in any of the above claims, said switch having a pre-determined switching speed, each delay line being additionally arranged to provide a guard band delay sufficient to take into account said switching speed.

8. An optical buffer as claimed in any of the above claims, arranged for an optical packet switching network, the buffer being arranged to receive packets which will be temporally aligned to within a pre-determined tolerance, each delay line being additionally arranged to provide a guard band delay sufficient to take into account said pre-determined tolerance.

9. An optical buffer as claimed in claim 8 further comprising optical packet synchronising means arranged to align packets received on different inputs that temporally overlap, said alignment being to within said pre-determined temporal accuracy.

10. An optical buffer as claimed in any of the above claims, further comprising control means arranged to route the received optical signals through the optical buffer according to a pre-determined control method.

11. An optical buffer as claimed in any of the above claims, further comprising optical amplifying means arranged to amplify optical signals, for decreasing the affects of attenuation of an optical signal as it passes through the buffer.

**12.** A telecommunications system comprising at least one optical transmitter, at least one optical receiver, an optical transmission medium extending between and connecting said transmitter and said receiver, and an optical buffer comprising a photonic switch having at least

a first optical input for receiving optical signals, at least a first optical output for outputting optical signals, M additional optical inputs and M additional optical outputs, where M is a positive integer; and M optical delay lines, each delay line extending between one of said additional inputs and one of said additional outputs.

**13.** A method for buffering an optical signal in an optical buffer comprising a photonic switch having at least a first and a second optical input for receiving optical signals, a first optical output for outputting optical signals, M additional optical inputs and M additional optical outputs, where M is a positive integer; and M optical delay lines, each delay line extending between one of said additional inputs and one of said additional outputs , the method comprising:

receiving at said first and second inputs two optical signals that temporally overlap, and are for the same output;

assigning a priority flag to each signal;

forwarding the signal in the buffer with the highest priority;

placing the next highest priority signal in the shortest available delay line;

repeating the above step until all packets have been placed in a delay line;

sequentially increasing the priority flag of each packet as it passes through a delay line.

**14.** A method as claimed in claim 13, wherein if the number of signals is such as to exceed the capacity of available delay lines, any such signals are dropped.

**15.** A computer programme arranged to control a buffer according to the method as claimed in claim 13 or claim 14.

**16.** A computer programme as claimed in claim 15 wherein said computer programme is stored on a machine readable medium.

**17.** An electronic circuit arranged to control a buffer according to the method as claimed in claim 13 or claim 14.

**18.** A circuit as claimed in claim 17, said circuit comprising at least one of an ASIC (Application Specific Integrated Circuit) and an Uncommitted Logic Array

**19.** A method of buffering an optical signal utilising a photonic switch having at least three inputs and two outputs, and having at least one of said inputs connected to a respective output by an optical delay line, the method comprising the steps of

receiving an optical signal on an input;

switching the signal to an output connected to a delay line;

transmitting the signal along the delay line; and

switching the signal from an input connected to a delay line to an output not connected to a delay line.

**20.** A method as claimed in claim 19, wherein at least one of said outputs is substantially a beam stop, the method comprising the step of switching said signal to the beam stop output for dropping the signal.

**21.** A method as claimed in claim 19 or claim 20, further comprising the step of transmitting the signal along the delay line at least a second time.

**22.** A method as claimed in any of claims 19 to 21, said switch having at least four inputs and three outputs, and having at least two of said inputs each connected to a respective output by an optical delay line, the method further comprising the steps of switching the signal to a second output connected to a delay line; and transmitting the signal along the delay line.

**Dilated buffer**
**Figure 1**

EP 1 176 846 A2

**Recirculating Integer Array Delay Line Optical Buffer**

- Minimum buffer: D, Maximum buffer $\sum_{k=1}^{M} kD$

- Effective buffer: Traffic dependent

**Figure 2**

EP 1 176 846 A2

**Recirculating buffer algorithm 260**

Packets received from delay lines

Packets received from inputs  250

240

Packets ranked in Delay priority  255

280

Remaining packets Identified in priority Rank order to be Propagated in shortest Available delay line

Highest priority Packet identified For forwarding

270

Packet priority Incremented by Value of delay line

If no available delay line then drop

230  290

Figure 3

## Variable length delay
## 70% Load

Figure 4

EP 1 176 846 A2

**Loop buffer**

-minimum buffers
*ND m fibre*
-multiple passes through switch
Max: *N+1 traversals*
**Figure 5**

**Buffer Architecture**

**Figure 6**